# EUROPÄISCHE PATENTSCHRIFT

(11) **EP 1 409 311 B1**
(45) Veröffentlichungstag und Bekanntmachung des Hinweises auf die Patenterteilung: **03.05.2006**
(21) Anmeldenummer: 02753012.0
(22) Anmeldetag: 11.07.2002
(51) Int. Cl.: B60T 7/22, B60R 21/01

(54) **VERFAHREN UND VORRICHTUNG ZUM AUSLÖSEN UND DURCHFÜHREN EINER VERZÖGERUNG EINES FAHRZEUGS**
METHOD AND DEVICE FOR INITIATING AND EXECUTING A DECELERATION OF A VEHICLE
PROCEDE ET DISPOSITIF POUR DECLENCHER ET EXECUTER UNE DECELERATION D'UN VEHICULE

(30) Priorität: 11.07.2001 DE 10133025
(43) Veröffentlichungstag der Anmeldung: 21.04.2004
(73) Patentinhaber: ROBERT BOSCH GMBH, 70442 Stuttgart (DE)
(72) Erfinder: KNOOP, Michael, 71638 Ludwigsburg (DE); BRAEUCHLE, Goetz, 74934 Reichertshausen (DE); WINNER, Hermann, 76467 Bietigheim (DE); WEILKES, Michael, 74343 Sachsenheim (DE); HEINEBRODT, Martin, 70176 Stuttgart (DE); UHLER, Werner, 76646 Bruchsal (DE); HERMSEN, Wolfgang, 61267 Neu Anspach (DE); THIELE, Joachim, 70732 Tamm (DE); STAEMPLE, Martin, 89075 Ulm (DE); OECHSLE, Fred, 71642 Ludwigsburg (DE); WILHELM, Ulf, 71277 Rutesheim (DE)
(86) Internationale Anmeldenummer: PCT/DE2002/002546
(87) Internationale Veröffentlichungsnummer: WO 2003/006291

(56) Entgegenhaltungen:
- DE-A- 10 020 744
- DE-A- 19 514 654
- DE-A- 19 547 111
- DE-A- 19 748 898
- DE-A- 19 857 992
- US-A- 6 085 151
- US-B1- 6 256 565
- WINNER ET AL: "Adaptive Cruise Control System Aspects and Development Trends" SAE TRANSACTIONS, SOCIETY OF AUTOMOTIVE ENGINEERS, INC., WARRENDALE, PA, US, Bd. 105, Nr. 961010, 1996, Seiten 1412-1421, XP002124577 ISSN: 0096-736X in der Anmeldung erwähnt

## Beschreibung

Es wird ein Verfahren und eine Vorrichtung zum Auslösen und Durchführen einer Verzögerung eines Fahrzeugs zur Vermeidung einer Kollision bzw. Verminderung der Unfallschwere vorgeschlagen, bei welchem mittels mindestens eines Radar-, Lidar oder Videosensors oder einer Kombination hieraus Objekte im Sensorerfassungsbereich erkannt und für jedes erkannte Objekt Messgrößen ermittelt werden, die erkannten Objekte aufgrund der ermittelten, zugehörigen Messgrößen verschiedenen Objektklassen zugeordnet werden und aufgrund der Zuordnung der erkannten Objekte zur jeweiligen Klasse die Bewegungstrajektorien der Objekte prädiziert werden. Aus diesen prädizierten Bewegungstrajektorien der Objekte und deren zugehörigen, erkannten Objektklassen wird weiterhin ein Kollisionsrisiko sowie ein Gefährdungsmaß ermittelt und bei Vorliegen vorgebener Kombinationen aus Kollisionsrisiko und Gefährdungsmaß werden die Verzögerungseinrichtungen des Fahrzeugs entsprechend angesteuert.

### Stand der Technik

In der Vergangenheit sind vermehrt Systeme zur adaptiven Abstands- und Geschwindigkeitsregelung auf den Markt gekommen, die die Funktionalität eines herkömmlichen Tempomaten dahingehend erweitern, dass bei Erkennen eines vorherfahrenden, langsameren Fahrzeugs vor dem eigenen Fahrzeug die Geschwindigkeitsregelung umgeschaltet wird auf eine Abstandsregelung und dem vorherfahrenden Fahrzeug mit gleicher Geschwindigkeit gefolgt wird. Die grundsätzliche Funktionsweise eines derartigen Abstands- und Geschwindigkeitsregelsystems ist in dem Aufsatz "adaptive cruise control system aspects and development trends" von Winner, Witte et al.,
SAE-paper 96 10 10, erschienen auf der SAE International Congress and Exposition, Detroit, 26.-29. Februar 1996, beschrieben.

In der DE 195 47 111 ist ein Verfahren und eine Vorrichtung zur Steuerung der Bremsanlage eines Fahrzeugs beschrieben, bei welchem bereits vor Beginn einer Antriebsschlupfregelung Druck in die Radbremsen bei Vorliegen vorgegebener Bedingungen eingesteuert wird, wobei keine nennenswerte Bremswirkung an den Antriebsrädern aufgebracht wird.

Aus der US 6,085,151, die die Merkmale des Oberbegriffs der innerbhängigen Ansprüche 1 und 14 zeigt, ist ein KoUisionserkennuogssystem bekannt, das eine schmal gebündelte Hochfrequenzstrahtlungskeule oder optischer Strahtungskeute über einen großen Azimutbereich schwenkt. Aus dem Empfangssignal wird der Abstand und die Geschwindigkeit jedes Reflexionspunktes bestimmt. Die einzelnen Reflexionen werden durch eine Clusteranalyse zusammengefasst und mittels eines kartesischen Koordinatensystems unter Verwendung eines KaJman.Filters verfolgt. Die Bedrohung, die für das eigene Fahrzeug von dem Objekt ausgeht, wird aus Schätzungen des Relativabstands der Geschwindigkeit und der Größe des Ziels beurteilt und hieraus eine oder mehrere Vorrichtungen angesteuert, um die Sicherheit der Fahrzeuginsassen zu erhöhen.

### Kern und Vorteile der Erfindung

Der Kern der vorliegenden Erfindung ist es dementsprechend, ein Verfahren und eine Vorrichtung zum Auslösen und Durchführen einer Verzögerung eines Fahrzeugs zur Vermeidung einer Kollision bzw. Verminderung der Aufprallenergie bereitzustellen. Dabei ist insbesondere vorgesehen, dass das Verfahren und die Vorrichtung eine automatische Notbremsung auslösen und durchführen kann und hierfür einen automatisch gesteuerten Lenk- und/oder Bremseingriff durchführen kann. Erfindungsgemäß wird diese Aufgabe durch die Merkmale der unabhängigen Ansprüche gelöst. Vorteilhafte Weiterbildungen und Ausgestaltungen ergeben sich aus den Unteransprüchen.

Dies geschieht vorteilhafterweise, indem eine Vorrichtung zur Abstands- und Geschwindigkeitsregelung Objekte im Sensorerfassungsbereich des Fahrzeugs erkennt und für jedes der erkannten Objekte Messgrößen ermittelt. Aufgrund der ermittelten Messgrößen wird jedem erkannten Objekt eine Objektklasse zugeordnet und aufgrund der zugeordneten Objektklasse eine Schar charakteristischer, möglicher Bewegungstrajektorien prädiziert. Weiterhin wird mittels der erkannten Objektklasse und der ermittelten Bewegungstrajektorien ein Kollisionsrisiko und ein Gefährdungsmaß bestimmt, in dessen Abhängigkeit die Verzögerungseinrichtungen des Fahrzeugs aktiviert werden können.

Die Vermeidung einer Kollision umfasst im vorliegenden Fall auch die Verminderung der Aufprallenergie zur Minderung der Aufprallschwere, wenn eine Kollisionsvermeidung unmöglich ist. Das Kollisionsrisiko gibt die Wahrscheinlichkeit an, mit der das Fahrzeug mit einem Objket kollidiert. Das Gefährdungsmaß hingegen schätzt die Gefährdung der Insassen des Fahrzeugs durch diese mögliche Kollision. Im Falle, dass sich zwei Fahrzeuge unweigerlich mit den Außenspiegeln beim aneinander Vorbeifahren berühren besteht ein hohes Kollisionsrisiko, jedoch ein nur geringes Gefährdungsmaß, so dass ein automatische Verzögerungseinleitung nicht ausgeführt werden darf.

Weiterhin ist es vorteilhaft, dass die Vorrichtung zur Abstands- und Geschwindigkeitsregelung des Fahrzeugs ein Radarsensor, ein Lidarsensor, ein Videosensor oder eine Kombination hieraus ist.

Weiterhin ist es vorteilhaft, dass es sich bei den ermittelten Messgrößen um mindestens eine der Größen Abstand des Objektes zum eigenen Fahrzeug, Relativgeschwindigkeit des Objektes in Bezug auf die eigene Fahrzeuggeschwindigkeit, horizontale Ausdehnung des Objektes, vertikale Ausdehnung des Objektes, Geometrie des Objektes, dabei insbesondere Geometrie der Rückseite des Objektes sowie um die Oberflächenbeschaffenheit der Reflexionsfläche, die insbesondere die Objektrückseite ist, handelt. Es sind auch noch weitere Messgrößen denkbar, die aus den empfangenen und rückgestreuten Radar-, Lidar- oder Videosignalen ermittelbar sind.

Vorteilhafterweise geschieht die Einordnung in die Objektklassen in Abhängigkeit der ermittelten Messgrößen, woraufhin das Objekt einer der Klassen Person, Motorrad, kleiner Personenkraftwagen, großer Personenkraftwagen, Lastkraftwagen, Bus, Leitplanke, Verkehrsschild, Gebäude oder ein anderes, durch die rückgestreute Radar-, Lidar- oder Videosignale charakterisierbares Objekt ist.

Vorteilhafterweise geschieht die Einordnung in Objektklassen in Abhängigkeit, ob die einzelnen Objekte von einzelnen Sensoren oder von bestimmten Sensorkombinationen erkannt und zugeordnet werden können oder nicht sich oder gar nicht detektierbar sind.

Zur Ermittlung der Bewegungstrajektorien ist es weiterhin vorteilhaft, dass für jede Objektklasse ein charakteristisches fahrdynamisches Modell hinterlegt ist, mit dessen Hilfe die zu prädizierende Schar möglicher Bewegungstrajektorien mit erhöhter Genauigkeit ermittelt werden kann.

Weiterhin ist es vorteilhaft, dass das Kollisionsrisiko und das Gefährdungsmaß die Wahrscheinlichkeit eines Zusammenstoßes mit einem erkannten Objekt darstellt, sofern kein Fahrereingriff erfolgt. Im Falle eines skalaren Kollisionsrisikos und eines skalaren Gefährdungsmaßes ist es vorteilhaft, dass die Verzögerungseinrichtungen bei Überschreiten von Schwellenwerten angesteuert werden. Weiterhin ist es denkbar, dass das Kollisionsrisiko und das Gefährdungsmaß eine oder mehrere vektorielle Größen sind und dass zur Ansteuerung der Verzögerungseinrichtungen des Fahrzeugs bestimmte Vektorbedingungen erfüllt sein müssen. Weiterhin ist es vorteilhaft, dass der skalare Schwellenwert bzw. die vektorielle Auslösebedingung nicht konstant ist, sondern in Abhängigkeit der Verkehrssituation veränderbar ist. So ist es vorteilhaft, dass die Ansteuerung der Verzögerungseinrichtungen in Anhängigkeit der momentanen Umfeldsituation angepaßt werden kann.

Weiterhin ist es vorteilhaft, dass der Schwellenwert in Abhängigkeit der Fahreraktivität, also der Betätigung des Fahrpedals, des Bremspedals oder des Lenkrades, veränderbar ist. Dadurch ist es möglich, die Verzögerungseinrichtungen erst zu einem kritischeren Zeitpunkt auszulösen, wenn erkannt wird, dass der Fahrer selbst ein Brems- oder Ausweichmanöver versucht. Wird erkannt, dass der Fahrer keine Aktivitäten vornimmt, so ist eine kann eine Auslösung bereits zu unkritischeren Situationen eingeleitet werden.

Besonders vorteilhaft ist es weiterhin, dass bei der Vorausberechnung der Bewegungstrajektorien des eigenen Fahrzeugs sowie der erkannten Objekte nur die Trajektorien berücksichtigt werden, bei denen infolge einer Kombination aus Lenk- und Bremseingriff, die an den Rädern des Fahrzeugs auftretenden Kräfte nicht größer sind, als die maximal vom Rad auf die Straße übertragbare Kraft. Durch Elimination der Bewegungstrajektorien, bei denen Lenk- und Bremskräfte auftreten, die vom Rad nicht auf die Straße übertragen werden können, lässt sich die Rechenleistung, die zur Ermittlung der Bewegungstrajetorien notwendig ist, verringern und somit die Leistungsfähigkeit des Systems steigern.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs, vorgesehen ist. Dabei ist auf dem Steuerelement ein Programm gespeichert, das auf einem Rechengerät, insbesondere auf einem Mikroprozessor oder Asic, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein read only memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

### Zeichnungen

Nachfolgend werden Ausführungsbeispiele der Erfindung anhand von Zeichnungen erläutert. Es zeigen
- Figur 1: ein Ablaufdiagramm zur Ausführung des erfindungsgemäßen Verfahrens,
- Figur 2: eine Vorrichtung zur Ausführung des erfindungsgemäßen Verfahrens.

### Beschreibung von Ausführungsbeispielen

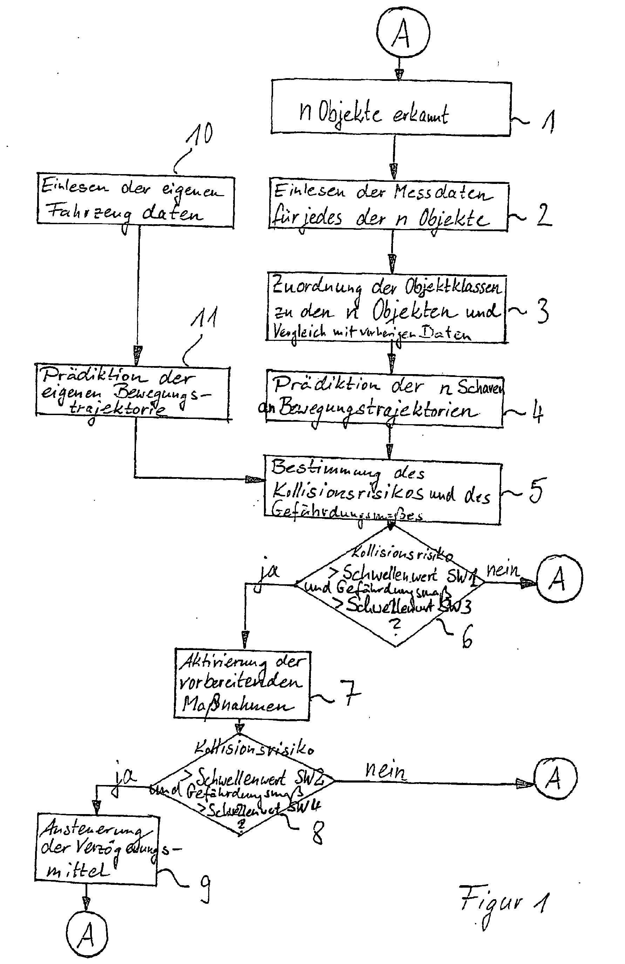

Figur 1 zeigt ein Ablaufdiagramm einer Ausführungsform des erfindungsgemäßen Verfahrens. Dieses Ablaufdiagramm stellt eine Endlosschleife dar und wird ständig neu durchlaufen. In Block 1 wird von der Umfeldsensorik im Form eines Radar-, Lidar- oder Videosensors festgestellt, wieviele Objekte im Erfassungsbereich des Sensors liegen. Diese n erkannten Objekte werden im Speicher abgelegt. In Block 2 des Ablaufdiagramms erfolgt das Einlesen der Messdaten für jedes der n Objekte. Diese umfassen dabei verschiedene Größen, die direkt von der Umfeldsensorik bereitgestellt werden. Bei den Messgrößen kann es sich um eine oder mehrere der folgenden Größen handeln: Relativgeschwindigkeit des Objekts zum eigenen Fahrzeug, Abstand des Objekts, horizontale Ausdehnung des Objekts, vertikale Ausdehnung des Objekts, Geometrie des Objekts und Oberflächenbeschaffenheit der Reflexionsfläche. Diese Messdaten zum Zeitpunkt t+Δt werden mit den Messdaten des vorangehenden Messzyklusses zum Zeitpunkt t verglichen um festzustellen, ob es sich bei dem erkannten Objekt um ein erstmals erkanntes Objekt handelt oder ob es ein berits erkanntes und mittlerweile weiterbewegtes Objekt handelt. Aus der Zeitableitung dieser Veränderungen können auch weitere Größen abgeleitet werden, beispielsweise die Beschleunigung aus gemessenen Geschwindigkeitswerten. Im darauffolgenden Schritt 3 wird anhand der zum Objekt gehörigen Messdaten eine Objektklasse ausgewählt. Dies geschieht beispielsweise mittels Korrelation der charakteristischen Objektklassen mit den Messdaten. Als Objektklassen dienen charakteristische Muster der jeweiligen Objekte. So besitzt beispielsweise ein Motorrad einen anderen Radarrückstreuquerschnitt als ein Lastkraftwagen bzw. ein Fahrzeug eine andere charakteristische Geschwindigkeit als ein stehendes Gebäude. Aufgrund derartiger Eigenheiten der Objektklassen wird in den Messdaten eines jeden Objektes mittels einer Korrelationsanalyse jedem Objekt eine Objektklasse zugeordnen. In Schritt 4 des Ablaufdiagrammes erfolgt die Prädiktion einer Schar an Bewegungstrajektorien für jedes der n Objekte. Hierzu bedient man sich eines charakteristischen fahrdynamischen Modells, das für jede der Objektklassen abgelegt ist. So ist ein Motorrad beispielsweise in der Lage, schneller Lenkbewegungen auszuführen als dies für einen Bus oder einen Lastkraftwagen möglich ist. Das jeweilige fahrdynamische Modell, das entsprechend der ermittelten Objektklasse zu Hilfe genommen wird, wird mit den in Schritt 2 eingelesenen Messdaten verknüpft, wodurch eine präzisere Schar an Bewegungstrajektorien vorausberechnet werden kann, als dies ohne fahrdynamisches Modell möglich wäre.
   Parallel zu den Schritten 1 bis 4 des Ablaufdiagrammes werden in Block 10 die Daten der eigenen Fahrzeugbewegung erfasst und in Block 11 eine Bewegungstrajektorie für das eigene Fahrzeug ermittelt. In Schritt 5 wird auf Grundlage der Schar an Bewegungstrajektorien, die für das eigene Fahrzeug ermittelt wurden und aufgrund der Scharen an Bewegungstrajektorien, die für die erkannten Objekte ermittelt wurden, ein Kollisionsrisiko und ein Gefährdungsmaß bestimmt. Dieses Kollisionsrisiko bestimmt die Wahrscheinlichkeit, dass ein Zusammenstoß des eigenen Fahrzeugs mit einem der n Objekte bevorsteht. Dieses Kollisionsrisiko kann entweder ein skalarer Wert sein, der um so größer ist, je höher die Wahrscheinlichkeit eines Zusammenstoßes ist. Weiterhin ist auch denkbar, dass das Kollisionsrisiko eine vektorielle Größe ist, wodurch die Situation mittels mehrerer Kriterien bewertet werden kann. Das ermittelte Gefährdungsmaß berücksichtigt hingegen die Gefährdung der Insassen des Fahrzeugs ohne auf das Kollisionsrisiko rücksicht zu nehmen. Auch diese Größe kann skalar oder vektoriell gestaltet sein. In Schritt 6 erfolgt eine Abfrage, ob das in Schritt 5 ermittelte Kollisionsrisiko größer ist als ein bestimmter Schwellenwert SW1 sowie ob das Gefährdungsmaß größer ist als ein bestimmter Schwellenwert SW2. Handelt es sich bei denen in Schritt 5 ermittelten Größen Kollisionsrisiko und Gefährdungsmaß um eine vektorielle Größe, so ist bei der Abfrage in Schritt 6 eine multikriterielle Abfrage notwendig. So ist es denkbar, dass nur ein einziger Wert der Vektoren Kollisionsrisiko und/oder Gefährdungsmaß, die Bedingungen erfüllen muss oder aber, dass alle Werte der Vektoren jeweils für sich die Ja-Bedingungen erfüllen müssen. Weiterhin ist auch denkbar,- dass ein bestimmtes Muster der Vektoren erfüllt sein muss, um mit einer Ja-Entscheidung weiterzuverfahren. Wird Schritt 6 als Nein beantwortet, so verzweigt der Ablauf zum Kreis A und beginnt mit Schritt 1 wieder von Neuem. Erfolgt die Verzweigung in Schritt 6 nach Ja, so können vorbereitende Maßnahmen für eine bevorherstehende Notbremsung eingeleitet werden. Diese vorbereitenden Maßnahmen können beispielsweise darin bestehen, den Fahrer mittels einer akustischen, optischen oder kinästhetischen Vorrichtung über das aktuelle Kollisionsrisiko zu informieren oder es wird ein Rückhaltesystem für Fahrzeuginsassen vorbereitet bzw. aktiviert oder es wird die Motordrehzahl auf Leerlaufdrehzahl abgesenkt oder das Getriebe in Neutralstellung gebracht, so dass keine Kraftübertragung mehr stattfindet oder eine Speicherung der Messdaten in einem nicht-flüchtigen Speichermedium durchgeführt oder aber eine Kombination der dargestellten Maßnahmen vorgenommen. In dem hier dargestellten Beispiel wird zur Durchführung einer oder mehrerer vorbereitender Maßnahmen nur ein Schwellenwert ausgewertet. Teil der Erfindung ist es jedoch auch, dass für jede einzelne der beschriebenen, vorbereitenden Maßnahmen ein eigener Schwellenwert definiert wird, der zur jeweiligen Aktivierung überschritten sein muss. In diesem Fall müsste für jede Aktion ein Entscheidungsschritt, ähnlich wie Schritt 6, sowie ein Aktionsschritt, ähnlich Schritt 7, hintereinander ausgeführt werden. In Schritt 8 des Ablaufdiagrammes wird entschieden, ob das Kollisionsrisiko größer als ein Schwellenwert SW2 ist. Ist dies nicht der Fall, so verzeigt das Diagramm nach A, wodurch das Programm zum Anfang springt und der Algorithmus wieder bei Schritt 1 beginnt. Ist die Bedingung im Entscheidungsschritt 8 mit Ja zu beantworten, so erfolgt eine weitere Verarbeitung im Schritt 9, indem die Verzögerungsmittel angesteuert werden. Die Entscheidung im Schritt A kann auch hier wieder entweder in skalarer Form oder in vektorieller Form, ähnlich wie in Schritt 6, durchgeführt werden. Werden in Schritt 9 die Verzögerungsmittel angesteuert, so wird eine automatische Notbremsung ausgelöst und im weiteren das Fahrzeug abgebremst, bis das Fahrzeug im Stillstand steht oder nach erneutem Durchlauf des Ablaufdiagramms ein Abbruch für günstiger erachtet wird. Nach Ansteuerung der Verzögerungsmittel in Block 9 springt das Ablaufdiagramm zu Schritt 1 und durchläuft diesen Zyklus von Neuem. Dabei bleiben die Verzögerungsmittel aktiviert und können erst im nächsten Durchlauf, wenn die Verzögerungsbedingungen dann nicht mehr erfüllt sind, gelöst werden.

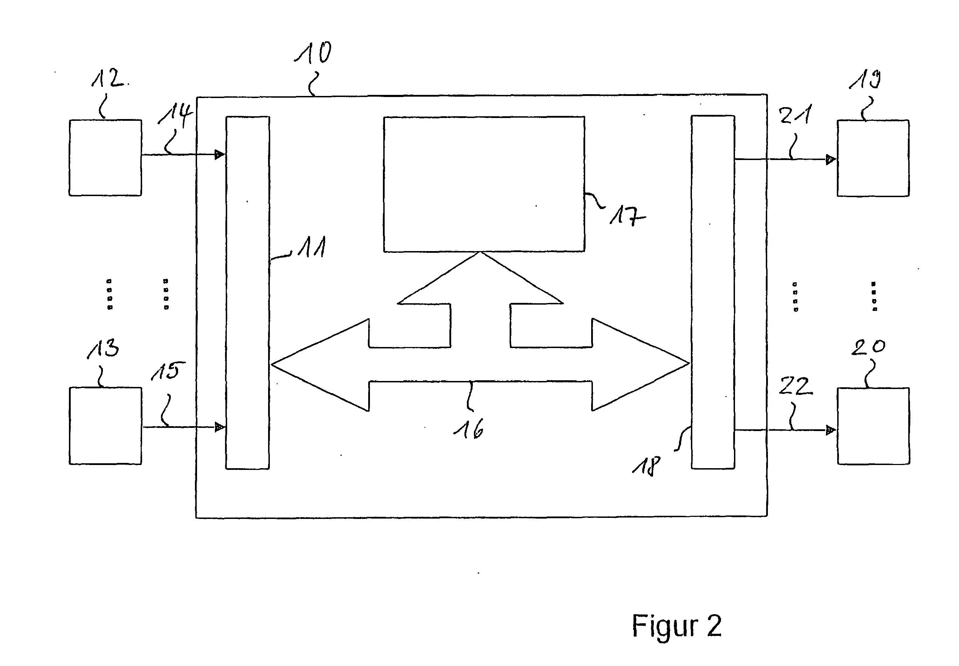

Figur 2 zeigt eine erfindungsgemäße Vorrichtung zur Durchführung des erfindungsgemäßen Verfahrens. Die Vorrichtung 10 zum Auslösen und Durchführen einer Verzögerung eines Fahrzeugs beinhaltet ein Eingangsfeld 11, dem eine oder mehrere Eingangssignale 14 bis 15 von Sensorvorrichtungen 12 bis 13 zugeführt werden. Als Sensorvorrichtungen 12 bis 13 kommen zum einen ein Radar-, Lidar- oder Videosensor oder eine Kombination hieraus in Betracht, sowie weitere Einrichtungen, mit denen das eigene Fahrzeugverhalten detektiert werden kann. Beispielsweise sind hier Einrichtungen zur Ermittlung der eigenen Fahrgeschwindigkeit, Gierrate, Fahrzeugbewegungsrichtung, Bremspedalbetätigung, Fahrpedalbetätigung sowie ein Lenkwinkelsensor zu nennen. Die im Eingangsfeld 11 ankommenden Signale werden mittels eines Datenttransportsystems 16 einer Auswerteeinheit 17 zugeführt. In der Auswerteeinheit 17 wird das Verfahren zum Auslösen und Durchführen der Fahrzeugverzögerung zur Vermeidung einer Kollision durchgeführt. Diese Auswerteeinrichtung 17 gibt je nach Fahrzeugsituation und Umfeldsituation Ausgangssignale aus, die mittels des Datentransportsystems 16 einem Ausgangsfeld 18 zugeführt werden. Hierbei handelt es sich beispielsweise um Signale, die den Fahrer in akustischer, optischer oder kinästhetischer Form über das aktuelle Kollisionsrisiko informieren, oder um Signale zur Vorbereitung bzw. Aktivierung von Rückhaltesystemen, wie Airbags oder Gurtstraffer, oder es wird ein Signal zur Absenkung der Motordrehzahl auf Leerlaufdrehzahl ausgegeben oder ein Signal ausgegeben, das das Getriebe in Neutralstellung bringt, so dass keine Kraftübertragung mehr stattfindet oder bei unmittelbarem Bevorstehen eines Zusammenstoßes werden Messdaten, die dem Eingangsfeld 11 zugeführt wurden, in einem nicht-flüchtigen Speichermedium abgespeichert. Ein weiteres Ausgangssignal, das über das Ausgangsfeld 18 ausgegeben werden kann ist ein Signal zur Ansteuerung der Verzögerungsmittel. Hierbei ist zu erwähnen, dass die Verzögerungsmittel vor Auslösung der Notbremsung vorbereitet werden, indem die Bremsanlage vorbefüllt wird und die Bremsbeläge an den Bremsscheiben angelegt werden, ohne dass nennenswerte Bremskräfte auftreten. Ein weiteres Ausgangssignal an die Verzögerungsmittel kann die Auslösung der Vollbremsung repräsentieren, wodurch eine maximal mögliche Verzögerung aufgebracht wird. Ein weiteres Signal, das den Verzögerungsmitteln zugeführt werden kann, ist ein Signal, das eine Teilverzögerung bewirkt, also eine Verzögerung, deren Bremswirkung zwischen der maximal möglichen Bremswirkung und keiner Bremswirkung liegt. Die Signale 21 bis 22, die über das Ausgangsfeld 18 ausgegeben werden dienen als Eingangsgrößen für weitere Verarbeitungseinrichtungen 19 bis 20. Als mögliche Einrichtungen 19, 20 sind insbesondere die Verzögerungseinrichtungen zu nennen, jedoch auch die Motorsteuerung, die Getriebesteueurng, ein Betriebsdatenspeicher, ein Steuergerät für Rückhaltesysteme, oder eine Fahrerinformationseinrichtung.

## Patentansprüche

1. Verfahren zum Auslösen und Durchführen einer Verzögerung eines Fahrzeugs zur Vermeidung einer Kollision bzw. Verminderung der Aufprallschwere mit einem Objekt,
**dadurch gekennzeichnet,**
- **dass** mittels einer Vorrichtung zur Abstands- und Geschwindigkeitsregelung des Fahrzeugs Objekte im Sensorerfassungsbereich erkannt (1) und für jedes erkannte Objekt Meßgrößen ermittelten werden (2),
- **dass** die erkannten Objekte aufgrund der ermittelten, zugehörigen Meßgrößen verschiedenen Objektklassen zugeordnet werden (3), wobei als Objektklassen die Klassen Person, Motorrad, kleiner Personenkraftwagen, großer Personenkraftwagen. Lastkraftwagen, Bus, Leitplanke, Verkehrsschild und Gebäude vorgesehen sind,
- **dass** aufgrund der Zuordnung der erkannten Objekte zur jeweiligen Klasse eine Schar Bewegungstrajektorien für mindestens ein Objekt prädiziert wird (4),
- **dass** aufgrund der prädizierten Schar an Bewegungstrajektorien und der erkannten Objektklassen ein Kollisionsrisiko ermittelt wird (5), das die Wahrscheinlichkeit angibt, dass das Fahrzeug mit einem Objekt kollidiert,
- **dass** aufgrund der prädizierten Schar an Bewegungstrajektorien und der erkannten Objelaklassen ein Gefährdungsmaß ermittelt wird (5), das die Gefährdung der Insassen durch die mögliche Kollision abschätzt, und
- **dass** die Verzögerungseinrichtungen (19,20) des Fahrzeugs bei einem vorgebbaren Kollisionsrisiko und/oder einem vorgebbaren Gefährdungsmaß aktiviert werden(6,7).

2. Verfahren nach Anspruch 1, **dadurch gekennzeichnet, dass** in Abhängigkeit des ermittelten Kollisionsrisikos weitere Fahrzeugfunktionen aktivierbar sind.

3. Verfahren nach Anspruch 2, **dadurch gekennzeichnet, dass** es sich bei den weiteren, aktivierbaren Fahrzeugfunktionen um mindestens eine der folgenden Funktionen handelt:
- akustische, optische oder kinasthetischa Information des Fahrers Ober das aktuelle Kollisionsrisiko,
- Vorbereitung bzw. Aktivierung von Rückhaltesystemen für Fahrzeuginsassen.
- Absenkung der Motordrehzahl auf Leerlaufdrehzahl
- Getriebe in Neutralstellung bringen, so dass keine Kraftübertragung mehr stattfindet,
- Speicherung der Messdaten in einem nicht-flüchtigen Speichennedium.

4. Verfahren nach Anspruch 1, **dadurch gekennzeichnet, dass** die Vorrichtung zur Abstands- und Geschwindigkeitsregelung des Fahrzeugs eine Radarsensor, ein Lidarsensor, ein Videosensor oder eine Kombination ist.

5. Verfahren nach Anspruch 1, **dadurch gekennzeichnet, dass** es sich bei den ermittelten Meßgrößen um mindestens eine der Größen Relativgeschwindigkeit des Objektes, Abstand des Objektes, horizontale Ausdehnung des Objektes, vertikale Ausdehnung des Objektes, Geometrie des Objektes, Oberflächenbeschaffenheit der Reflexionsfläche handelt.

6. Verfahren nach Anspruch 1, **dadurch gekennzeichnet, dass** die Einordnung der erkannten Objekte in Objektklassen in Abhängigkeit erfolgt, von welchem Sensor oder welcher Sensorkombination das Objekt detektierbar ist und/oder welcher Sensor bzw. welche Sensorkombination das Objekt nicht detektieren kann.

7. Verfahren nach Anspruch 1, **dadurch gekennzeichnet, dass** für jede Objektklasse ein fahrdynamischen Modell hinterlegt ist aus dem fur jedes erkannte Objekt, unter Zuhilfenahme der für dieses Objekt ermittelten Meßgrößen. eine Schar von Bewegungstrajektorien prädiziert wird.

8. Verfahren nach Anspruch 1, **dadurch gekennzeichnet, dass** das Kollisionsrisiko die Wahrscheinlichkeit eines nicht verhinderbaren Zusammenstoßes darstellt.

9. Verfahren nach Anspruch 1, **dadurch gekennzeichnet, dass** das vorgebbare Kollisionsrisiko, bei dem die Verzögerungseinrichtungen des Fahrzeugs aktiviert werden, ein Schwellenwert ist.

10. Verfahren nach Anspruch 1, **dadurch gekennzeichnet, dass** das Gefährdungsmaß die zu erwartende Aufprallwucht eines nicht verhinderbaren Zusammenstoßes beschreibt.

11. Verfahren nach Anspruch 1, **dadurch gekennzeichnet, dass** das vorgebbare Gefährdungsmaß, bei dem die Verzögerungseinrichtungen des Fahrzeugs aktiviert werden, ein Schwellenwert ist.

12. Verfahren nach Anspruch 9 oder 11, **dadurch gekennzeichnet, dass** die Schwellenwerte zur Aktivierung der Verzögerugseinrichtungen in Abhängigkeit der Verkehrssituation veränderbar sind.

13. Verfahren Nach Anspruch 1 oder 7, **dadurch gekennzeichnet, dass** bei der Vorausberechnung der Bewegungstrajektorien des eigenen Fahrzeugs sowie der erkannten Objekte nur die Trajektorien berücksichtigt werden, bei denen infolge einer Kombination aus Lenk- und Bremseingriff die an den Rädern des Fahrzeugs auftretenden Kräfte nicht größer sind, als die maximal vom Rad auf die Straße übertragbar Kraft.

14. Vorrichtung (10) zum Auslösen und Durchführen einer Verzögerung eines Fahrzeugs zur Vermeidung einer Kollision bzw. Verminderung der Aufprallschwere mit einem Objekt,
**dadurch gekennzeichnet,**
- **dass** dieser Vorrichtung Meßgrößen einer Vorrichtung (12,13) zur Abstands- und Geschwindigkeitsregelung zugeführt werden, die Objekte im Sensorerfassungsbereich repräsentieren,
- **dass** Objektklassifizierungsmittel vorgesehen sind, die eine Zuordnung der erkannten Objekte in verschiedene Objektklassen vormimmt, wobei als Objektklassen die Klassen Person, Motorrad, kleiner Personenkraftwagen, großer Personenkraftwagen, Lastkraftwagen, Bus, Leitplanke, Verkehrsschild und Gebäude vorgesehen sind,
- **dass** Prädiktionsmittel vorgesehen sind, die für jedes erkannte Objekt in Abhängigkeit der zugeordneten Objektklasse eine Schar möglicher Bewegungstrajektorien ermitteln,
- **dass** Kollisionsrisikoermittlungsmittel zur Ermittlung einer Wahrscheinlichkeit eines Zusammenstoßes mit einem der erkannten Objekte vorgesehen sind und
- **dass** Gefährdungsmaßermittlungsmittel zur Ermittlung einer Wahrscheinlichkeit der Verletzung der Insassen infolge eines Zusammenstoßes mit einem der erkannten Objekte vorgesehen sind und
- **dass** Mitte! vorgesehen sind, die eine Ansteuerung der Verzögerungseinrichtungen des Fahrzeugs ermöglichen (19,20).

## Revendications

1. Procédé pour déclencher et exécuter une décélération d'un véhicule afin d'éviter une collision ou réduire la force d'impact avec un objet,
**caractérisé en ce que**
- on identifie (1) des objets dans une zone de détection de capteur au moyen d'un dispositif de régulation de distance et de vitesse du véhicule et on détermines (2) des grandeurs de mesure pour chaque objet identifié,
- on associe (3) les objets identifiés sur la base des grandeurs de mesure correspondantes déterminées à différentes classes d'objets, avec comme classes d'objets, les classes : Personne, Motocyclette, Petite voiture, Grosse voiture, Camion, Bus, Glissière de sécurité et Bâtiment
- on prédit (4) une multitude de trajectoires de déplacement pour au moins un objet sur la base de l'association des objets identifiés à la classe correspondante ,
- sur la base de la multitude prédite de trajectoires de déplacement et des classes d'objets identifiées on détermine (5) un risque de collision qui indique la probabilité que le véhicule entre en collision avec un objet,
- sur la base de la multitude prédite de trajectoires de déplacement et des classes d'objets identifiées on déterminé (5)un risque de collision qui évalue la mise en danger des occupants par la collision possible, et
- les dispositifs de décélération (19, 20) du véhicule sont activés (6, 7) en présence d'un risque de collision prédéfini et/ou d'une mise en danger prédéfinie.

2. Procédé selon la revendication 1,
**caractérisé en ce que**
d'autres fonctions du véhicule sont activables en fonction du risque de collision déterminé.

3. Procédé selon la revendication 2,
**caractérisé en ce que**
les autres fonctions du véhicule activables sont au moins une des fonctions suivantes :
- information sonore, visuelle ou cinesthétique du conducteur sur le risque de collision courant,
- préparation ou activation de systèmes de retenue pour les occupants du véhicule,
- réduction du régime du moteur au point mort,
- mise de la boîte de vitesses en position neutre, de sorte qu'il n'y ait plus de transmission de force,
- mémorisation des données de mesure dans un support de mémoire non volatile.

4. Procédé selon la revendication 1,
**caractérisé en ce que**
le dispositif de régulation de distance et de vitesse du véhicule est un capteur radar, un capteur lidar, un capteur vidéo ou une combinaison de ceux-ci.

5. Procédé selon la revendication 1,
**caractérisé en ce que**
les grandeurs de mesure déterminées sont au moins une des grandeurs suivantes : vitesse relative de l'objet, distance de l'objet, dimension horizontale de l'objet, dimension verticale de l'objet, géométrie de l'objet et état de surface de la surface réfléchissante.

6. Procédé selon la revendication 1,
**caractérisé en ce que**
la classification des objets identifiés dans les classes d'objets se fait en fonction du capteur ou de la combinaison de capteurs avec lesquels l'objet peut être détecté et/ou du capteur ou de la combinaison de capteurs qui ne peuvent pas détecter l'objet.

7. Procédé selon la revendication 1,
**caractérisé en ce que**
pour chaque classe d'objets on enregistre un modèle de dynamique de déplacement à partir duquel une multitude de trajectoires de déplacement sont prédites pour chaque objet identifié à l'aide dés grandeurs de mesure déterminées pour cette objet.

8. Procédé selon la revendication 1.
**caractérisé en ce que**
le risque de collision représente la probabilité d'une collision inévitable.

9. Procédé selon la revendication 1,
**caractérisé en ce que**
le risque de collision prédéfinie en présence duquel les dispositifs de décélération du véhicule sont activés est une valeur seuil.

10. Procédé selon la revendication 1,
**caractérisé en ce que**
la mise en danger décrit la force d'impact d'une collision inévitable.

11. Procédé selon la revendication 1,
**caractérisé en ce que**
la mise en danger prédéfinie en présence de laquelle les dispositifs de décélération du véhicule sont activés est une valeur seuil.

12. Procédé selon la revendication 9 ou 11,
**caractérisé en ce que**
les valeurs seuils pour activer les dispositifs de décélération sont variables en fonction des conditions de circulation.

13. Procédé selon la revendication 1 ou 7,
**caractérisé en ce que**
lors du calcul préalable des trajectoires de déplacement du véhicule lui-même ou des objets identifiés, seules sont prises en compte les trajectoires pour lesquelles, suite à une combinaison d'opérations de braquage et de freinage, les forces agissant sur les roues du véhicule ne sont pas supérieures à la force maximale que la roue peut transmettre à la route.

14. Dispositif (10) pour déclencher et exécuter une décélération d'un véhicule pour éviter une collision ou réduire la force d'impact avec un objet,
**caractérisé en ce**
- ce dispositif que reçoit des grandeurs de mesure d'un dispositif (12, 13) de régulation de distance et de vitesse qui représentent les objets dans la zone de détection de capteur,
- des moyens de classification d'objets effectuent une association des objets identifiés à différentes classes d'objets, avec comme classes d'objets, les classes Personne, Motocyclette, Petite voiture, Grosse voiture, Camion, Bus, Glissière de sécurité et Bâtiment
- des moyens de prédiction déterminent une multitude de trajectoires de déplacement possibles pour chaque objet identifié en fonction de la classe d'objets correspondante,
- on prévoit des moyens de détermination de risque de collision pour déterminer une probabilité de collision avec un objet identifié,
- on prévoit des moyens de détermination de mise en danger pour déterminer une probabilité de blessure des occupants à la suite d'une collision avec un des objets identifiés, et
- des moyens permettent de commander les dispositifs de décélération du véhicule (19, 20).

## Claims

1. Method for initiating and executing a deceleration of a vehicle in order to avoid a collision or reduce the severity of an impact with an object, **characterized**
- **in that** objects in the sensor capture range are detected (1) by means of a device for regulating distance and speed of the vehicle and measured variables are determined (2) for each detected object,
- **in that** the detected objects are assigned (3) to various object classes on the basis of the determined associated measured variables, with the classes of person, motorbike, small passenger car, large passenger car, lorry, bus, crash-barrier, road sign and building being provided as object classes,
- **in that** a group of movement trajectories for at least one object is predicted (4) on the basis of the assignment of the detected objects to the respective class,
- **in that** a collision risk which specifies the probability of the vehicle colliding with an object is determined (5) on the basis of the predicted group of movement trajectories and the detected object classes,
- **in that** a hazard measure which estimates the hazard presented for the vehicle occupants by the possible collision is determined (5) on the basis of the predicted group of movement trajectories and the detected object classes, and
- **in that** the deceleration devices (19, 20) of the vehicle are activated (6, 7) when there is a predefinable risk of collision and/or a predefinable hazard measure.

2. Method according to Claim 1, **characterized in that** further vehicle functions can be activated as a function of the determined collision risk.

3. Method according to Claim 2, **characterized in that** the further activatable vehicle functions are at least one of the following functions:
- acoustic, visual or kinaesthetic information for the driver about the current collision risk,
- preparation or activation of restraint systems for vehicle occupants,
- reduction in the engine speed to an idling speed,
- placing the gearbox in a neutral position so that force is no longer transmitted,
- storing the measurement data in a non-volatile storage medium.

4. Method according to Claim 1, **characterized in that** the device for regulating distance and speed of the vehicle is a wheel sensor, a lidar sensor, a video sensor or a combination.

5. Method according to Claim 1, **characterized in that** the determined measured variables are at least one of the variables relative speed of the object, distance of the object, horizontal extent of the object, vertical extent of the object, geometry of the object, surface condition of the reflection face.

6. Method according to Claim 1, **characterized in that** the classification of the detected objects into object classes is carried out as a function of which sensor or which sensor combination can detect the object and/or which sensor or which sensor combination cannot detect the object.

7. The method as claimed in claim 1, **characterized in that** for each object class a fluid-dynamic model is stored, from which a group of movement trajectories is predicted for each detected object, with the aid of the measured variables which are determined for this object.

8. Method according to Claim 1, **characterized in that** the risk of collision represents the probability of a collision which cannot be prevented.

9. Method according to Claim 1, **characterized in that** the predefinable risk of collision in the case of which the deceleration devices of the vehicle are activated is a threshold value.

10. Method according to Claim 1, **characterized in that** the hazard measure describes the anticipated impact momentum of an impact which cannot be prevented.

11. Method according to Claim 1, **characterized in that** the predefinable hazard measure in the case of which the deceleration devices of the vehicle are activated is a threshold value.

12. Method according to Claim 9 or 11, **characterized in that** the threshold values for activating the deceleration devices can be changed as a function of the traffic situation.

13. Method according to Claim 1 or 7, **characterized in that** during the calculation in advance of the movement trajectories of the driver's own vehicle and of the detected objects only those trajectories are taken into account with which, owing to a combination of steering and braking interventions, the forces which occur at the wheels of the vehicle are not greater than the maximum force which can be transmitted from the wheel to the road.

14. Device (10) for initiating and executing a deceleration of a vehicle in order to avoid a collision or reduce the severity of an impact with an object, **characterized**
- **in that** this device is supplied with measured variables of a device (12, 13) for regulating the distance and speed, said variables representing objects in the sensor capture range,
- **in that** object classification means are provided which assign the detected objects to various object classes, the classes person, motorbike, small passenger car, large passenger car, lorry, bus, crash barrier, road sign and building being provided as object classes,
- **in that** prediction means are provided which determine a group of possible movement trajectories for each detected object as a function of the assigned object class,
- **in that** collision risk determining means are provided for determining a probability of a collision with one of the detected objects, and
- **in that** hazard measure determining means are provided for determining a probability of the vehicle occupants being injured as a result of a collision with one of the detected objects, and
- **in that** means are provided which permit the deceleration devices of the vehicle to be actuated (19, 20).
